# EUROPEAN PATENT APPLICATION

(11) **EP 2 378 174 A1**
(43) Date of publication of application: **19.10.2011**
(21) Application number: 10831440.2
(22) Date of filing: 29.10.2010
(51) Int. Cl.: F16L 11/04, A47L 9/24, B29C 65/36

(54) **FLEXIBLE HOSE AND MANUFACTURING METHOD FOR SAME**

(30) Priority: 19.11.2009 JP 2009263522
(71) Applicant: Tigers Polymer Corporation, Toyonaka-shi, Osaka 565-0082 (JP)
(72) Inventor: YAMASHITA Kazuya, Kobe-shi Hyogo 651-2271 (JP)
(74) Representative: Diehl & Partner GbR
(86) International application number: PCT/JP2010/069288
(87) International publication number: WO 2011/062045

(57) **Abstract**

A flexible hose including a tube has an improved adhesion uniformity of tube to a hose unit and an improved quality. The flexible hose comprises a hose unit 1 and a tube 2 adhered to an inner wall of the hose unit, and the tube is adhered to the hose unit with a heat-generating adhesive member 3 which generates heat by an electromagnetic means and is arranged along a longitudinal direction of the tube. The heat-generating adhesive member 3 is preferably a linear member which generates heat by passage of a current to express an adhesive property. Further, the heat-generating adhesive member 3 preferably has a main body 31 comprising a non-heat-generating thermoplastic adhesive and a heating wire 32 embedded in the main body along a longitudinal direction of the heat-generating adhesive member 3.

## Description

### TECHNICAL FIELD

The present invention relates to a flexible hose for a vacuum cleaner or others and a process for producing the flexible hose. In particular, the present invention relates to a flexible hose including a tube forming a sectional internal space of the flexible hose (for example, a tube for recycling exhaust air from a vacuum cleaner to a cleaner nozzle, or a tube for encasing a lead wire), and a process for producing the flexible hose.

### BACKGROUND ART

Such a flexible hose including a tube (or a flexible hose with a built-in tube) is known, for example, from Japanese Patent Application Laid-Open No. 201073/1994 (JP-6-201073A, Patent Document 1). Moreover, EP1011960 (B1) publication (Patent Document 2) discloses a process for producing such a flexible hose. Patent Document 2 discloses a process for producing a flexible hose comprising a hose unit and a tube adhered to an inside of the hose unit, the process comprising applying a thermoplastic adhesive in a molten state to a tube, introducing the tube into the hose unit, and then adhesively attaching the tube to the hose unit by pressing the whole hose unit.

Moreover, W02008/035484 (A1) publication (Patent Document 3) relates to a technique for adhering a tube to an inner surface (an inner circumferential surface) of a hose, and discloses that a bonding nozzle unit, which is capable of continuously executing a first step for applying a molten thermoplastic adhesive to an inner surface of the hose or to an outer surface of the tube and a second step for pressing the tube against the hose to adhere the tube to the hose, is inserted in the hose, and the tube is adhered to the hose while relatively moving the bonding nozzle unit from one end to the other end of the hose.

### RELATED ART DOCUMENTS

### PATENT DOCUMENTS

Patent Document 1: JP-6-201073A
Patent Document 2: European Patent EP1011960 (B1)
Patent Document 3: International Publication No. WO2008/035484 (A1)

### SUMMARY OF THE INVENTION

### PROBLEMS TO BE SOLVED BY THE INVENTION

However, the conventional production process described in Patent Document 2 has the following disadvantages. That is, according to the production process of Patent Document 2, the tube is introduced into the hose unit successively with a molten adhesive applied on the outer surface of the tube, and after completion of the introduction of the tube, the tube is adhered (or attached) to the hose unit by pressing the tube against the inner wall of the hose unit. As a result, there is inevitably a large time lag between the time of application of the adhesive and the time of adhesion of the tube to the hose unit, particularly in the forward end region of the tube. Thus in the forward end region of the tube, the temperature of the adhesive tends to decrease to deteriorate the adhesiveness. On the other hand, in the backward end region of the tube, there is a possibility that an excessive high temperature of the adhesive has a thermally adverse effect on the hose. Thus it is difficult to adhere the tube to the hose unit with a uniform condition over the entire length of the hose unit and the tube, and there is a possibility to cause a defect of the hose in quality.

Moreover, the temperature control (or regulation) of the adhesive in a molten state to be applied to the tube is very important in the conventional production processes or methods described in Patent Document 2 or Patent Document 3. A low temperature of the adhesive sometimes causes an insufficient adhesion, and a high temperature of the adhesive may make the suitable control of the width or thickness of the adhesive difficult to adversely affect the elasticity or bendability of the hose. However, in the conventional production processes or methods, since the temperature of the adhesive is controlled by an apparatus for discharging the adhesive (an extruder), the control level is sometimes insufficient. Thus, these processes or methods may induce the deterioration in quality of the hose, such as incomplete adhesion or deterioration inbendability, or lack of uniformity of those properties in the longitudinal direction of the hose.

It is therefore an object of the present invention to improve the uniform adhesion between a hose unit and a built-in tube in a flexible hose including a tube and improve the quality of the flexible hose. Moreover, it is another object of the present invention to provide a process for efficiently producing such a flexible hose.

### MEANS TO SOLVE THE PROBLEMS

The inventor of the present inventionmade intensive studies to achieve the above objects and finally found that, when a tube is adhered (or adhesively attached) to a hose unit with a heat-generating adhesive member (heatable adhesive member) which generates heat by an electromagnetic means to express an adhesive property, the adhesion condition of an adhesive can be controlled uniformly and precisely (or accurately), and the above-mentioned problems can be solved. The present invention was accomplished based on the above findings.

The present invention includes a flexible hose comprising a hose unit (or a hose body) and a tube disposed (or inserted) inside and adhered to (or adhesively attached to) the hose unit (or a tube adhered to an inner wall of the hose unit), wherein the tube (the outer wall of the tube) is adhered to the hose unit (the inner wall of the hose unit) with (or through) a heat-generating adhesive member (or heat-generating adhesive layer), and the heat-generating adhesive member generates heat by an electromagnetic means and is arranged along a longitudinal direction of the tube. Specifically, the flexible hose of the present invention comprises a hose unit (a hose body) , a tube introduced (or inserted) inside (or in a hollow of) the hose unit (or a tube disposed in the hose unit along an inner wall of the hose unit in a longitudinal direction thereof), and a heat-generating adhesive member interposed between the hose unit and the tube and disposed along (or extended in) a longitudinal direction (or long direction) of the tube (and/or the inner wall of the hose unit); and the tube (the outer wall of the tube) and the hose unit (the inner wall of the hose unit) are adhered or welded together by generating heat from the heat-generating adhesive member (specifically, generating heat from the heat-generating adhesive member by which at least part of the adhesive member is softened or melted, reacted (crosslinked) , or hardened to express an adhesive property) by an electromagnetic means (for example, by passage of a current and/or electromagnetic wave irradiation).

Further, in the present invention, the preferred heat-generating adhesive member is a linear member generating heat by passage of a current (or by applying a current) to express (or exhibit) an adhesive property. Such a heat-generating adhesive member may contain a heating wire (or a heating element) which generates heat by passage of a current (for example, a metal wire). For example, it is preferable that the heat-generating adhesive member have a main body comprising a non-heat-generating resin or adhesive (e.g. , a thermoplastic adhesive or a thermoplastic resin) and a heating wire (e.g., a metal wire) embedded in (or laid under) the main body along a longitudinal direction of the adhesive member [e.g., the heat-generating adhesive member comprise a linear main body comprising a non-heat-generating resin or adhesive and a heating wire embedded in the main body along a longitudinal direction of the main body]. Moreover, the main body of the heat-generating adhesive member [specifically, a region (or zone) of the main body, being in contact with the hose unit (the inner wall of the hose unit)] may have a form (or shape) corresponding to the hose unit (or the inner wall of the hose unit) (for example, a strip (or flat, depressed) form along an inner surface of the hose unit in a circumferential direction of the hose unit), the embedded heating wire may be located in the inside (for example, a central or nearly central region) of the main body in the circumferential direction of the hose unit (or the thickness direction of the main body). The main body of the heat-generating adhesive may be disposed on the tube along the longitudinal direction of the tube (and/or the hose unit) in a form corresponding to (or following) the inner wall of the hose unit.

Alternatively, the heat-generating adhesive member (e.g., the linear heat-generating adhesive member generating heat by passage of a current to express an adhesive property) may comprise an electro-conductive resin material. For example, it is preferable that the main body of the heat-generating adhesive member comprise a resin material (in particular, a thermoplastic adhesive or a thermoplastic resin) and at least have a longitudinally-extending (or linear) region which comprises an electro-conductive resin material (or an electro-conductive adhesive such as an electro-conductive thermoplastic adhesive). The electro-conductive resin material may be, for example, a resin material containing an electro-conductive material (an electro-conductive additive) [that is, a resin composition containing an electro-conductive material and a resin (particularly, a thermoplastic resin), or an electro-conductive adhesive (particularly, an electro-conductive thermoplastic adhesive)]. The heat-generating adhesive member is not particularly limited to a specific one as long as the resin material containing the electro-conductive material can be made in at least a linear (or longitudinally-extending) form. For example, the electro-conductive material may be contained (or dispersed) all over the resin material (or a non-electro-conductive resin material, e.g., a thermoplastic resin material) as the main body, or the electro-conductive material in a linear form may be contained in a local region of the main body (e.g., the inside of the main body, such as a central or nearly central region of the main body).

Further, the preferred heat-generating adhesive member is a member generating heat by electromagnetic wave irradiation to express an adhesive property.

The flexible hose of the present invention may be a hose for a vacuum cleaner.

Moreover, the present invention includes a process for producing a flexible hose comprising a flexible hose unit (or a hose unit) and a tube adhered to an inner wall of the hose unit. The process comprises a first step for arranging (or unifying) a heat-generating adhesive member on an outer surface of the tube, the heat-generating adhesive member generating heat by an electromagnetic means; following the first step, a second step for holding the tube by a rod-shaped holder with the heat-generating adhesive member exposed from the holder; following the second step, a third step for introducing the holder and the tube into the hose unit to face (or confront) the heat-generating adhesive member toward an inner surface (or an inner circumferential surface) of the hose unit; and following the third step, a fourth step for generating heat from the heat-generating adhesive member by an electromagnetic means (for example, passage of a current and/or electromagnetic wave irradiation) and bringing the hose unit and the heat-generating adhesive member in contact (or tight contact) with each other (or press-contacting the hose unit with the heat-generating adhesive member) to adhere the tube to the hose unit. In this process, the heated adhesive member may be brought in contact (or tight contact) with the hose unit, or the heat-generating adhesive member may be allowed to generate heat while the heat-generating adhesive member is in contact (or intimate contact) with the hose unit.

The present invention also includes a vacuum cleaner provided with the flexible hose.

### EFFECTS OF THE INVENTION

According to the invention related to the flexible hose and the invention related to the production process of the flexible hose, since an adhesion (or attachment or bonding) treatment or pressing is carried out by use of heat generated from the heat-generating adhesive member by an electromagnetic means, the amount of heat generated from the adhesive member is suitably controlled and heat is generated under the same condition over the whole length of the hose unit. Thus, the uniform adhesion can be achieved, and a high-quality flexible hose having an improved adhesion uniformity between the tube and the hose unit is obtained.

Moreover, as illustrated above, the linear heat-generating adhesive member, which generates heat by passage of a current, produces an advantage that the uniformity of the adhesion (adhesion condition) is further improved over the whole length of the hose unit in a longitudinal direction thereof. Further, as described above, when the main body of the heat-generating adhesive member comprises a non-heat-generating resin (particularly, a thermoplastic adhesive) and the heating wire is embedded in the main body along the longitudinal direction of the heat-generating adhesive member, thermal deformation of the tube or the hose unit due to direct contact with the heating wire is prevented or suppressed. Thus, the quality of the flexible hose can be further improved. Furthermore, as described above, when the main body of the heat-generating adhesive member has a form corresponding to the hose unit (or the inner wall of the hose unit) (for example, a strip (or flat, depressed) form along an inner surface of the hose unit in a circumferential direction thereof) and the heating wire is embedded in the inside of the main body (for example, a central or nearly central region of the main body) in the circumferential direction of the hose unit (or the thickness direction of the main body), the temperature or softened or molten state can be differentiated between the inside (e.g. , a central region) of the heat-generating adhesive member having the corresponding form (for example, a strip form) and an end thereof to appropriately control the cross-sectional shape of the heat-generating adhesive member in a flexible hose after adhesion treatment, and thus ahigher-quality flexible hose can be obtained.

Moreover, according to the above, the heat-generating adhesive member, which generates heat by passage of a current, is obtained effectively. Further, as described above, the heat-generating adhesive member generating heat by electromagnetic wave irradiation and expressing an adhesive property does not require wiring for passage of a current in the adhering step. Thus, the flexible hose can be produced efficiently.

### BRIEF DESCRIPTION OF DRAWINGS

[Fig. 1] Fig. 1 is a schematic perspective view for illustrating a constitution of a vacuum cleaner provided with a flexible hose in accordance with an embodiment of the present invention.
[Fig. 2] Fig. 2 is a fragmentary cross-sectional view showing a structure of a flexible hose in accordance with a first embodiment of the present invention.
[Fig. 3] Fig. 3 is a cross-sectional view taken on line X-X showing a structure of a flexible hose in accordance with the first embodiment of the present invention.
[Fig. 4] Fig. 4 is a schematic view showing steps for forming a tube and a heat-generating adhesive member together.
[Fig. 5] Fig. 5 is a schematic cross-sectional view showing a state in which a tube is held by a holder.
[Fig. 6] Fig. 6 is a schematic view showing a step for adhering (or adhesively attaching) a tube to a hose unit.
[Fig. 7] Fig. 7 is a schematic cross-sectional view showing a positional relationship between each members in a step for adhering a tube to a hose unit.
[Fig.8] Fig. 8 is a schematic cross-sectional view showing a state in which a hose unit is brought into contact with a heat-generating adhesive member in a step for adhering a tube to the hose unit.
[Fig. 9] Fig. 9 is a schematic cross-sectional view showing another embodiment of the heat-generating adhesive member.
[Fig. 10] Fig. 10 is a schematic perspective view showing another embodiment of the heat-generating adhesive member with respect to arrangement in a longitudinal direction of a tube.

### DESCRIPTION OF EMBODIMENTS

Hereinafter, embodiments of the present invention will be explained with reference to the drawings. The present invention is not limited to individual embodiments described below and includes modifications and variations of individual embodiments.

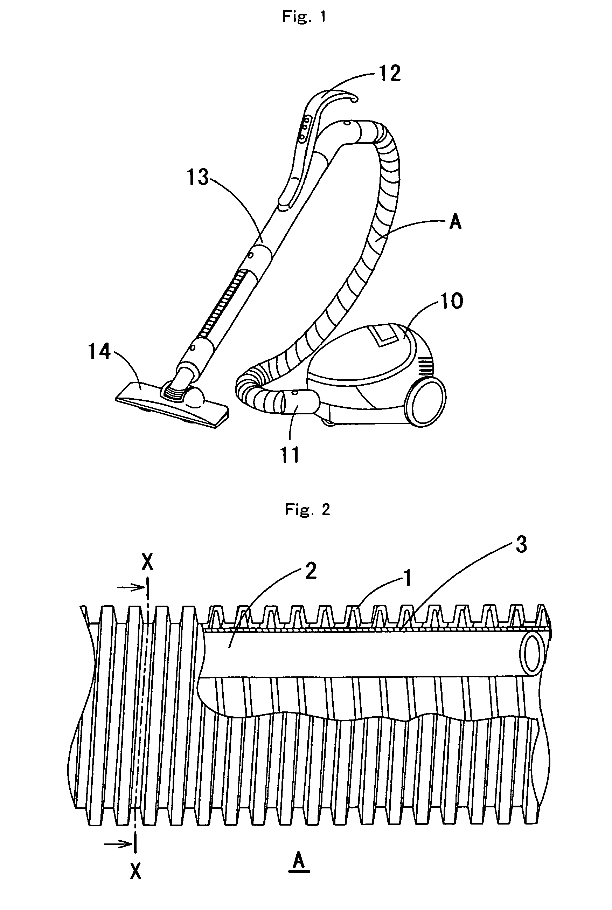

With respect to a first embodiment of the present invention, the use of the flexible hose of the present invention for a hose for a vacuum cleaner is shown. Fig. 1 represents an entire appearance of a vacuum cleaner.

In Fig. 1, a hose A for a vacuum cleaner represents a flexible hose made of a synthetic resin material, and a vacuum cleaner comprises a cleaner body 10 having a suction port, a joint pipe 11 detachably connected to the suction port, the hose A having a first end connected to the joint pipe 11, a grip (or handle) and operation unit 12 joined to a second end of the hose A, an extension pipe 13 detachably connected to the grip and operation unit 12, and a suction nozzle 14 detachably connected to the extension pipe 13. The hose A has a tube disposed thereinside (a built-in tube) as shown in Fig. 2. In this embodiment, the cleaner body 10 is electrically connected with the grip and operation unit 12 through an electric wire (not shown) within the tube.

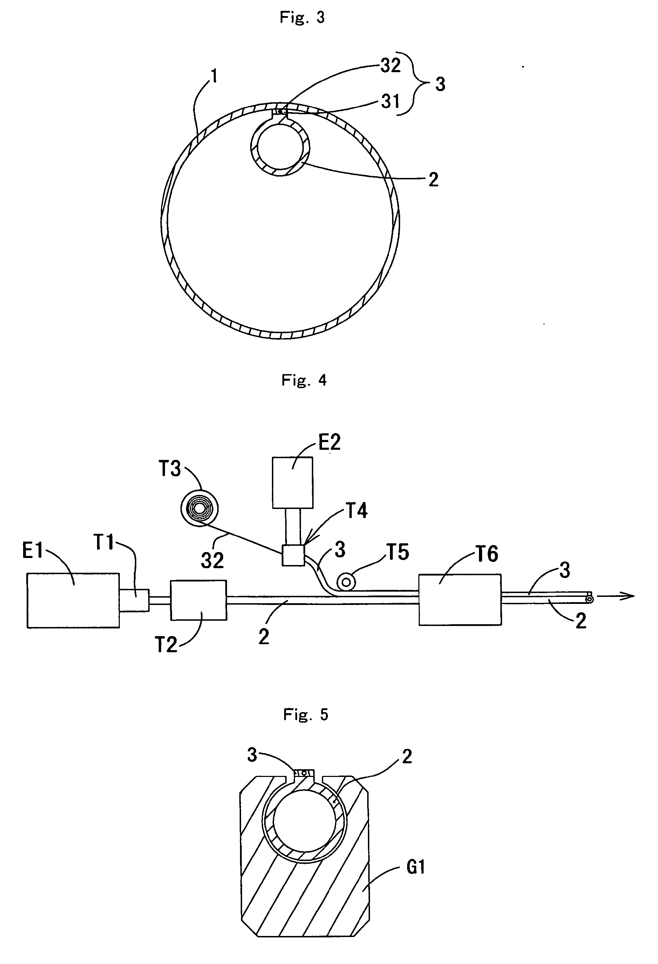

Fig. 2 is a fragmentary cross-sectional view of the flexible hose A of the first embodiment of the present invention, and Fig. 3 is a cross-sectional view taken on line X-X of Fig. 2. The flexible hose A comprises a flexible hose unit 1 and a tube 2 introduced thereinto (or inserted thereto), and the tube 2 is adhesively attached to (or integrated with) an inner surface (or inner wall) of the flexible hose unit 1 linearly [or along a long direction of the hose unit 1 (the inner surface of the hose unit 1)] with or through a heat-generating adhesive member 3, which will be explained later in detail.

In order to impart flexibility to the hose, the flexible hose unit 1 is molded to have a corrugated wall surface (specifically, the wall of the hose unit can have a bellows (or corrugated) shape having a protruded (larger diameter) portion and a groove (smaller diameter) portion, and these portions can be formed in a spiral form or in a form of a series of rings along the hose unit). As the flexible hose unit 1, there may be used a flexible hose molded by a method such as a known continuous blow molding or a spiral molding, in which a ribbon extruded with a predetermined form is spirally wound around a former and adhered into a hose. The flexible hose unit 1 may comprise a wall comprising a flexible soft resin and optionally a reinforcing member comprising a hard resin, a steel wire, or the like.

It is sufficient that the tube 2 has a flexibility that does not greatly deteriorate the bending flexibility of the hose unit 1. The tube may be a tube having a smooth wall surface as shown in Fig. 2, or if necessary, a corrugated tube may be used. Such a tube can be obtained by extrusion molding or continuous blow molding of a relatively soft resin material. In this embodiment, the tube 2 is a cylindrical tube having a smooth wall surface, and the wall of the tube has a thick region or area to be adhered (or attached) to the heat-generating adhesive member 3.

In this embodiment, the hose unit 1 and the tube 2 may be produced from, for example, a polyethylene resin, an ethylene-vinyl acetate resin (an EVA resin), a mixture thereof, or other resin materials. As a material for the tube 2 or the wall of the flexible hose unit 1, a soft (or plasticized) resin material may be used. For example, the soft resin material may include a plasticized polyvinyl chloride resin, an olefinic resin (e.g., a polypropylene resin, a polyethylene resin, and an EVA resin), a rubber-containing styrene-series resin, an acrylic resin, a polyester-series resin, a polyamide-series resin, a urethane-series resin, a thermoplastic elastomer (e.g., an olefinic thermoplastic elastomer, a styrene-series thermoplastic elastomer, a modified styrene-series thermoplastic elastomer, a polyester-series elastomer, a polyamide-series elastomer, and a polyurethane-series elastomer), and a mixed composition thereof. Examples of the preferred resin material may include a polyethylene resin [for example, a low-density polyethylene (e.g., a branched long-chain low-density polyethylene (LDPE), a linear (or straight) chain low-density polyethylene (LLDPE), and a metallocene LLDPE), and a high-density polyethylene (HDPE)], an EVA resin, and a mixture thereof. The resin material for the hose unit and that for the tube may be the same material, or may optionally be different materials from each other as long as the tube can be adhesively attached to the hose unit.

The heat-generating adhesive member 3 for adhering (or adhesively attaching) the tube 2 to the inner surface of the hose unit 1 will be explained. The heat-generating adhesive member in the present invention is an adhesive member having an adhesive function (or property) by generating heat by an electromagnetic means (e.g., passage of a current or electromagnetic wave irradiation). In this embodiment, the heat-generating adhesive member 3 is a linear adhesive member which generates heat by passage of a current (or an electrically heatable linear adhesive member) and disposed between the tube 2 and the inner surface of the hose unit to adhere the tube 2 to the hose unit 1. More specifically, the heat-generating adhesive member 3 comprises a main body 31 comprising a thermoplastic adhesive linearly formed along a longitudinal direction of the tube, and a metal heating wire 32, which is a twisted wire made of stainless-steel elements (or strands), embedded in the main body 31 along a longitudinal direction of the heat-generating adhesive member 3.

The main body 31 of the heat-generating adhesive member 3 has a strip or band (or flat) cross-section having a length in the circumferential direction of the hose unit larger than that in the radial direction thereof, and the metal heating wire 32 is embedded (or buried) in a central or nearly central region of the main body 31 (e.g., in both the radial and circumferential directions of the hose unit). That is, in order to avoid direct contact of the metal heating wire 32 with the inner surface of the hose unit 1 or the surface of the tube 2, the metal heating wire 32 is covered with a thermoplastic adhesive forming the main body 31 of the heat-generating adhesive member 3. In this embodiment, the main body 31 of the heat-generating adhesive member 3 comprises a non-heat-generating resin material which does not generate heat even by an electromagnetic means.

In this embodiment, as a thermoplastic adhesive for the main body 31 of the heat-generating adhesive member 3, there may be used the same resin as the above-mentioned resin material for the hose unit and/or the tube, for example, a polyethylene resin, an ethylene-vinyl acetate resin (an EVA resin), and a mixture thereof. The adhesive for the main body of the heat-generating adhesive member 3 is not particularly limited to a specific one as long as the adhesive has suitable flexibility and adhesive property for adhering both the hose unit 1 and the tube 2 and can express an adhesive property by heating. The adhesive may be a reactive adhesive (e.g., in which hardening or curing is accelerated by heating) or a thermosetting adhesive (e.g., a rubber material). The particularly preferred adhesive includes a thermoplastic adhesive because such an adhesive is softened or melted by heating to exhibit an adhesive property and immediately hardened by cooling to complete the adhesion treatment.

As the thermoplastic adhesive, an adhesive which is prepared and commercially available as a hot melt adhesive may be used, or a thermoplastic resin compatible with the material of the tube 2 or that of the hose unit 1 may be used. As shown in this embodiment, use of the same (or same series) material for the hose unit 1 as for the tube 2 allows broadening of a range of selection of the adhesive. Further, when a material for the adhesive is the same as those for the hose unit 11 or the tube 12, the tube can be adhered to the hose unit with the adhesive more positively or intimately.

Moreover, in order to prevent deformation or defective appearance of the hose unit or the tube, the adhesive for the heat-generating adhesive member 3 is more preferably an adhesive having a lower adhesion temperature needed (for example, for a thermoplastic adhesive, a melting point thereof) than a melting point of a material for the hose unit 1 or the tube 2.

The process for producing the flexible hose in the first embodiment of the present invention will be explained. The flexible hose of the present invention is produced by a step for producing the hose unit, a step for producing the tube and the heat-generating adhesive member, and a step for adhering (adhesively attaching) the tube to the hose unit.

### (Production step of hose unit)

The hose unit 1 can be produced by a known method, and can be cut into a predetermined length and subjected to the step for adhering the tube to the hose unit.

### (Production step of tube and heat-generating adhesive member)

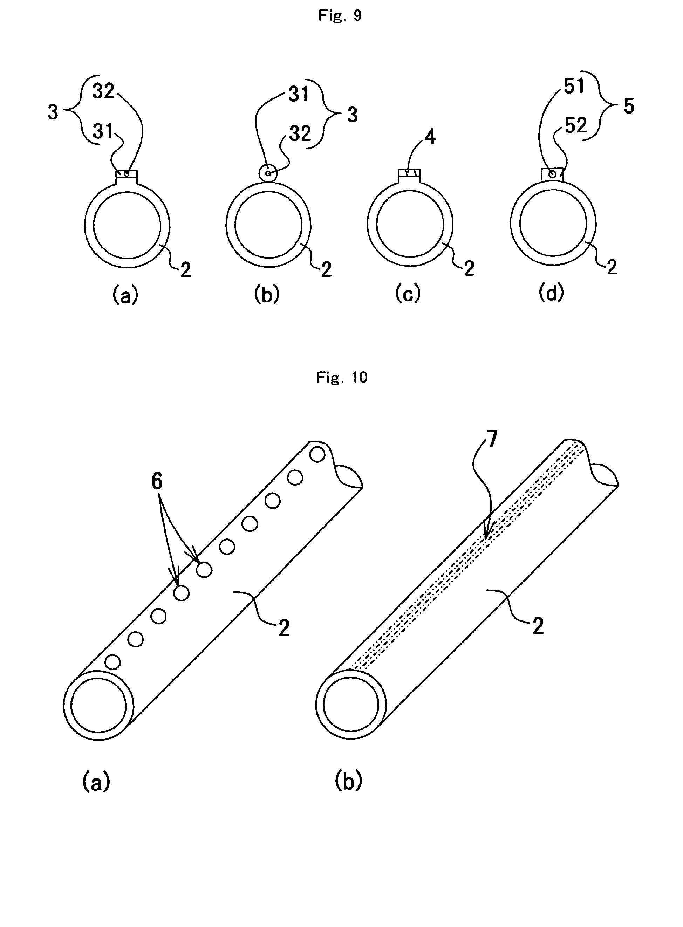

In this step, the heat-generating adhesive member 3 is adhered (or bonded or united) to the tube 2 for producing a composite member having a cross section as shown in Fig. 9(a). The tube 2 itself may be molded independently prior to this production step. A step for adhering the heat-generating adhesive member 3 to the tube 2 while molding the tube 2 and the heat-generating adhesive member 3 in a continuous process will be described below. Fig. 4 is a schematic view showing a production step of the tube and the heat-generating adhesive member. A molten resin material for the tube 2 is extruded in the form of a tube having a predetermined cross section through a die T1 of a first extruder E1 and passed through a sizing apparatus T2 to give the tube 2 having the predetermined cross section. On the other hand, a molten resin material for the main body 31 of the heat-generating adhesive member is fed from a second extruder E2 to a die T4 while feeding a stainless-steel twisted wire 32 from a feeder T3 to the die T4. In the inside of the die T4, the stainless-steel twisted wire (metal heating wire) 32 is arranged in a central or nearly central region of the main body 31 of the heat-generating adhesive member to extrude the heat-generating adhesive member 3 through the die T4. The heat-generating adhesive member 3 is overlapped with the obtained tube 2 at a predetermined position and pressed by a pressing means T5 (e.g., a roller) or subjected to another adhesion process to adhere the heat-generating adhesive member 3 to the tube 2. The adhering step can easily be conducted in a semi-molten state of the heat-generating adhesive member 3. Thereafter, the composite member comprising the tube 2 and the heat-generating adhesive member 3 adhered thereto is drawn by a cooling and drawing machine T6. The compositemember is cut into a predetermined length to be subjected to the step for adhering the tube to the hose unit.

### (Adhering step of hose unit and tube)

First, the metal heating wire 32 is exposed (or taken out) from both ends of the composite member having the predetermined length obtained in the above step for electrical connection. Then, the tube 2 is supported by a holder G1. The holder G1 has a groove (or a depression) on an upper surface thereof for holding the tube 2 in the groove as shown in the cross sectional view of Fig. 5. The holder G1 is a rod-shaped holder which can be inserted into the hose unit 1 and is longer than the whole length of the hose unit 1. In the adhering step, the holder serves to control and fix the position of the tube. The groove of the holder G1 has a size as large as the tube 2 is accommodated. The groove has a narrow aperture (opening) in an upper side thereof, and the width of the narrow aperture corresponds to that of the heat-generating adhesive member 3. The heat-generating adhesive member 3 is positioned at the narrow aperture to be exposed from the holder G1. As the holder G1 of this embodiment, it is preferable that the holder G1 be formed for holding the heat-generating adhesive member 3 by the upper inner surface of the groove to maintain the posture of the tube in the groove stably (or that the groove of the holder be formed for holding the posture of the tube stably).

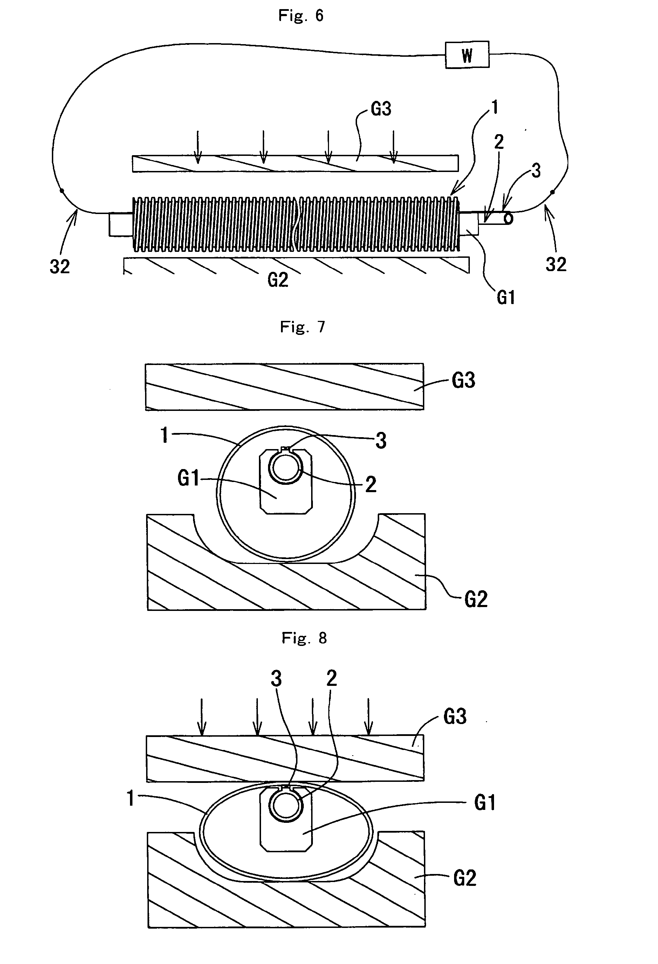

Next, the tube 2 and the heat-generating adhesive member 3 are introduced into the hose unit 1 with the holder G1 holding the tube 2 and the heat-generating adhesive member 3, and the hose unit 1 and the tube 2 are arranged at a predetermined positional relationship in the longitudinal direction of the hose unit. That is, as shown in Fig. 6, the holder G1 is introduced together with the tube 2 into the hose unit 1 with the hose unit 1 placed on a hose guide G2. In this arrangement, as shown in Fig. 7, the hose unit 1 is held by the hose guide member G2 having a groove on an upper surface thereof. The holder G1 is fixed at a position where the heat-generating adhesive member 3 can face or confront the inner surface of the hose unit.

Then, the heating wire 32 is connected to an electric-current circuit W and allows generating of heat by applying a current. Concurrently with the introduction of electric current, the hose unit is pressed toward the heat-generating adhesive member 3 by a pressurizing unit G3 to bring the inner surface of the hose unit in contact (or intimate contact) with the heat-generating adhesive member 3. According to this embodiment, as shown in Fig. 8, the hose unit 1 is pressed toward a radial direction thereof between the plate-shaped pressurizing unit G3 and the hose guide member G2 and is elastically deformed in a slightly depressed (flat) form.

The heat generated from the heating wire 32 by applying current melts the thermoplastic adhesive of the main body 31 of the heat-generating adhesive member, and the melted thermoplastic adhesive is brought in intimate contact with the inner surface of the hose unit. Thereafter, the current is stopped, and the heat-generating adhesive member 3 is solidified by cooling to adhere the tube 2 to the hose unit 1 through the adhesive member 3. The cooling may be conducted positively [e.g., by feeding cooling air (air cooling with blower) or using a coolant] or spontaneously (or by air cooling without blower). Usually, it is practically sufficient to conduct spontaneous cooling (or air cooling without blower).

In the heating and adhering (attaching) step, the heating wire 32 allows generating of heat to melt or soften at least part of the contact region or area, contacting with the inner surface of the hose unit 1, of the main body 31 of the heat-generating adhesive member 3 to an adhesive state. On the other hand, in the heating and adhering step, the resin material for the inner surface of the hose unit is not necessarily melted or softened. However, from the viewpoint of the adhesion strength (or bonding strength) of the hose unit to the heat-generating adhesive member, it is advantageous that to melt or soften the inner surface of the hose unit 1.

The applying timing of current to the heating wire 32 and the pressing timing of the hose unit are not particularly limited to a specific manner. After pressing the hose unit, the passage of current may be conducted while maintaining the pressing state; or after melting or softening the adhesive member 3 to some degree by applying a current to the heating wire 32, the hose unit may be pressed. Since in the former mode the inner surface of the hose unit 1 is also heated and easily softened or melted while the adhesive member 3 generates heat and is melted, it is advantageous to sufficiently improve (or enhance) an adhesion strength of the hose unit 1 to the adhesive member 3. On the other hand, since in the latter mode the heated and molten adhesive member 3 is pressed and adhered (or bonded) to the inner surface of the hose unit which is not yet heated, deformation of the wall of the hose unit 1 is prevented. In particular, in the case where the wall of the hose unit 1 is thin, the latter mode is advantageous.

Moreover, a concrete manner of the step for bringing the inner surface of the hose unit in contact (or intimate contact) with the heat-generating adhesive member 3 may be another manner, and for example, the holder G1 may be lifted toward the pressurizing unit G3.

After completion of adhesion between the tube 2 and the hose unit 1 with the heat-generating adhesive member 3, the pressure by the pressurizing unit G3 is released, and the holder G1 is pulled out of the hose unit with the tube 2 slid along the groove of the holder G1. The shape of the hose unit returns to an original cylindrical shape thereof due to the elasticity of the wall of the hose unit, and, as shown in Fig. 2 and Fig. 3, a flexible hose for a vacuum cleaner in accordance with the first embodiment of the present invention is obtained.

A function (or mechanism) and an advantage (or effect) of the above-mentioned embodiment will be explained. The flexible hose A of this embodiment can be produced efficiently with a high quality by the above-mentioned process. That is, according to the above production process, the heat-generating adhesive member 3 is adhered to the tube 2 beforehand, and the thermoplastic adhesive of the adhesive member is allowed to generate heat and express an adhesive property in a posture to be attached. Immediately thereafter (or concurrently), the thermoplastic adhesive is pressed to the inner surface of the hose unit for adhesion. According to such a production steps, since the thermoplastic adhesive (heat-generating adhesive member 3) is heated simultaneously under the same condition over the whole length of the hose unit, the adhesion condition can be uniformized over the whole hose unit and the uniform and intimate adhesion can be achieved. Moreover, since the control of the applied electric energy ensures a reliable control of the amount of heat generated from the adhesive member, the temperature of the heat-generating adhesive member can be controlled easily and precisely. Thus, a weak adhesion between the hose unit 1 and the tube 2 or a thermal deformation in the hose wall due to overheat of the hose wall is inhibited, and a uniform and high-quality flexible hose is obtained.

Further, as illustrated in the embodiment, when the heat-generating adhesive member 3 is linearly arranged and generates heat by applying a current, the amount of generated heat or the heating speed and timing can be regulated by controlling the applied electric energy, the energy-supplying time, and others. Thus, the temperature of the heat-generating adhesive member 3 is easily regulated and controlled, and the accuracy of the temperature control can be improved. The improved accuracy of the temperature control can accurately control the width of the heat-generating adhesive member 3 (the length in the circumferential direction of the hose) and the thickness thereof (the length in the radial direction of the hose) in the flexible hose A as a final product to easily obtain a desired hose bendability or adhesion strength. In particular, since the bendability of the hose easily deteriorates with increasing width of the heat-generating adhesive member 3, it is preferable to control or suppress the temperature of the heat-generating adhesive member 3 in order not to reach an excessively high temperature.

Moreover, as described in this embodiment, in the case where the heat-generating adhesive member 3 is an electrically heatable linear adhesive member, on the occasion of use of the hose, the linear adhesive member 3 can be utilized for eliminating static electricity due to the electro-conductivity thereof. Further, the linear heat-generating adhesive member 3 having an electro-conductivity (particularly, the heating wire 32) can also be utilized as a signal line or the like for connecting (or joining) the grip to the cleaner body. Thus such an adhesive member can reduce the number of signal lines to be provided separately.

Further, as described in this embodiment, when the main body 31 of the heat-generating adhesive member 3 comprises the non-exothermic thermoplastic adhesive and the heating wire 32 is embedded in the main body along the longitudinal direction of the adhesive member 3, an advantage that a uniform and high-quality hose can be obtained is particularly efficaciously produced. Moreover, embedding of the heating wire 32 in the non-heat-generating main body 31 prevents the tube 2 or the hose unit 1 from directly contacting with the heating wire 32 and damaging caused by the hot wire 32. In the light of prevention of heat damage or deformation of the tube 2, as shown in this embodiment, it is particularly preferable to make the wall thickness of the tube in a region or area in which the heat-generating adhesive member 3 is disposed (or arranged) larger than the wall thickness in another region or area.

Moreover, when the metal heating wire is used as an electrically heatable member, compared with the after-mentioned heating element made of an electro-conductive resin or the like, the resistance of the heating element can easily and accurately be controlled and the amount of heat generated from the heat-generating adhesive member 3 or the temperature of the adhesive member 3 can properly be controlled in the production process of the flexible hose. Thus the adhesion condition can be further stabilized, and a high-quality flexible hose is advantageously obtained.

Further, as shown in this embodiment, when the main body 31 of the heat-generating adhesive member 3 comprises a thermoplastic adhesive and has a strip form along the inner surface of the hose unit in the circumferential direction of the hose unit and the heating wire 32 is embedded in a central or nearly central region of the main body 31 in the circumferential direction of the hose unit, the adhesion state can be controlled more accurately. That is, when the heating wire 32 generates heat in the central region of the main body 31 of the strip-shaped heat-generating adhesive member, the central region of the main body 31 is heated more rapidly than both ends thereof. By controlling the heat-generating condition suitably, in the central region of the main body 31 the thermoplastic adhesive can be in a molten state, while in the both ends thereof the thermoplastic adhesive can be in an unmelted or unsoftened state or in a slightly less softened state compared with the central region thereof. In such a state, when the heat-generating adhesive member 3 is pressed to the inner surface of the hose unit, the both ends of the main body 31, which is in an unmelted or unsoftened state or in a slightly softened state, can serve as a spacer for properly maintaining the distance between the inner surface of the hose unit and the tube 2 and can suitably control the degree of deformation of the heat-generating adhesive member by pressing. Further, it is advantageous to suitable maintenance of the thickness of the heat-generating adhesive member 3 (the length in the radial direction of the hose unit) and the width of the heat-generating adhesive member 3 (the length in the circumferential direction of the hose unit), and the resulting hose is improved in quality.

The present invention is not limited to the above-mentioned embodiments, and various modifications and variations of the embodiments may be made. Hereinafter, another embodiment of the present invention will be explained. In the following explanation, different points from the above-mentioned embodiments are mainly described, and the explanation about the same or similar points is omitted.

### (Hose and tube)

The size or structure of the hose (hose unit) may be selected depending on the application. For a vacuum cleaner hose, the inside diameter of the hose unit is, for example, about 10 to 100 mm, preferably about 15 to 50 mm, and more preferably about 20 to 40 mm. Incidentally, the height of each protruded region (or raised portion, larger diameter portion) constituting the corrugated structure is, for example, about 1 to 10 mm, preferably about 1.5 to 8 mm, and more preferably about 2 to 5 mm. The pitch between the protruded regions (the distance between two adjacent protruded regions) is, for example, about 1 to 10 mm, preferably about 2 to 8 mm, and more preferably about 3 to 7 mm. The thickness of the hose unit is, for example, about 0.1 to 5 mm, preferably about 0.2 to 3 mm, and more preferably about 0. 3 to 2 mm. Incidentally, the inner wall of the hose unit may be smooth.

The inside diameter (average inside diameter) of the tube is smaller than the inside diameter of the hose unit and is, for example, about 3 to 20 mm, preferably about 5 to 15 mm, and more preferably about 6 to 10 mm.

Moreover, the thickness of the tube is, for example, about 0.1 to 2 mm, preferably about 0.2 to 1.5 mm, and more preferably about 0.3 to 1 mm. Incidentally, in the wall of the tube, a region or area in which the heat-generating adhesive member is disposed or arranged (or a region to be adhered or attached to the hose unit) can be thickened compared with another region or area. Such a thick-wall region inhibits deformation of the tube and allows efficient installing of the heat-generating adhesive member or efficient adhesion of the tube to the hose unit, depending on the thickness of the tube itself. The thickness of the thick-wall region (or thick region) may be about 1.05 times or more (e.g., about 1.1 to 10 times), preferably about 1.1 to 8 times, and more preferably about 1.2 to 5 times as large as the thickness of another region of the tube.

Incidentally, a conducting wire (for example, a stainless-steel wire, a steel wire, a copper wire, a nickel wire, and a coated (or insulated) conducting wire) or the like may be installed (or accommodated) in the inner space of the tube.

The material of the hose unit or that of the tube may be a thermosetting resin (e.g., a polyurethane) or a rubber and preferably includes a thermoplastic resin (for example, the thermoplastic resin as described above).

Moreover, the hose unit and/or the tube may contain a conventional additive, for example, a coloring agent (or a colorant) , a reinforcing filler (e.g. , an inorganic fiber such as a carbon fiber, and a filler particle (or a granular filler) such as a mica or a talc), a stabilizer [e.g., a phenol-series, thioether-series, phosphorus-series antioxidant, a light stabilizer (e.g., an ultraviolet ray absorbing agent), a heat stabilizer, andaweather-resistant stabilizer], a flame retardant, a lubricant, a dispersing agent, a foaming agent, a crosslinking agent, a pigment or dye stuff, and a mineral-oil-series softener.

### (Heat-generating adhesive member)

The average diameter of the heating wire in the heat-generating adhesive member may be selected from the range of about 0.01 to 5 mm (particularly about 0.05 to 3 mm) depending on the size or material of the hose unit. For example, the average diameter of the heating wire is, for example, about 0.01 to 3 mm, preferably about 0.05 to 2 mm, and more preferably about 0.1 to 1.5 mm (particularly about 0.5 to 1.0 mm).

The heating wire may be a single yarn or thread (strand) or a single wire. In order to provide some elasticity (or flexibility) for easily following elongation and contraction of the hose, the heating wire is preferably a composite yarn (composite wire) comprising a plurality of single yarns in combination (for example, a twisted (or stranded) wire, a knitted wire, and a twisted yarn). The number of single yarns or wires constituting the composite yarn or wire is not less than 2, e.g., about 2 to 100 and preferably about 3 to 50. For the composite yarn or wire, the average diameter of the single yarn or wire is not particularly limited to a specific one as long as the diameter of the composite yarn or wire is within the above-mentioned range. Incidentally, the shape of the cross section of the single yarn or wire is not particularly limited to a specific one and is usually an almost circular shape. In order to improve the adhesive property of the heating wire to a resin component, the heating wire may be surface-treated with a primer (for example, a silane coupling agent).

The length of the heating wire is larger than that of the main body and may usually be almost the same as the length of the hose unit and that of the tube.

The heating wire can generate heat by an electromagnetic means. The heating wire may be a stainless-steel wire, a metal wire (e.g., a steel wire, a copper wire, a nickel wire, and a chromium wire), and an electro-conductive nonmetal wire (e. g. , a carbon fiber).

The heating wire may be disposed (arranged or installed) on the surface of the main body as long as the heating wire can be brought into contact with the main body. It is preferable that the heating wire be embedded (or buried) in the main body. The embedded position of the heating wire depends on the size of the heat-generating adhesive member or others, and is usually a central or nearly central region (or a middle region) in the thickness direction of the heat-generating adhesive member (or main body).

The shape of the heat-generating adhesive member is not particularly limited to a specific one as long as the tube can be adhered (or bonded) to the hose unit. The heat-generating adhesive member may be a cylindrical shape (or a shape having a circular cross section), a prismatic shape (or a shape having a polygonal cross section, e.g., a square pole shape), and others. In order to improve the adhesiveness by contacting the adhesive layer with the inner wall of the hose unit efficiently, the heat-generating adhesive member preferably has a form or shape along (corresponding to) the inner wall of the hose unit [for example, a strip form (or a layer form)]. In particular, the heat-generating adhesive member (or the main body thereof) may be arranged on the tube (the outer wall of the tube) along the longitudinal direction (or long direction) of the tube in a form in which the heat-generating adhesive member (or the main body thereof) follows (or is intimately contacted with) the inner wall of the hose unit.

The thickness of the heat-generating adhesive member such as the strip-shaped heat-generating adhesive member (the average thickness, or the distance from a first contact surface with the hose unit to a second contact surface with the tube) depends on the diameter of the hose unit or that of the tube and is, for example, about 0.1 to 10 mm (e.g., about 0.1 to 5 mm), preferably about 0.3 to 3 mm, and more preferably about 0.5 to 2 mm. Moreover, the width (the average width) of the heat-generating adhesive member may be selected from the range of about 1 to 30 mm according to the diameter of the hose unit or that of the tube, and is, for example, about 1 to 20 mm, preferably about 2 to 15 mm, and more preferably about 3 to 10 mm.

Moreover, for the heat-generating adhesive member having the heating wire embedded in the main body thereof, the thickness of the heat-generating adhesive member (the main body) may be about 1.2 times or more (e.g., about 1.5 to 100 times), preferably about 2 to 50 times, and more preferably about 3 to 30 times (e.g., about 5 to 20 times) as large as the diameter of the heating wire.

Further, for the heat-generating adhesive member having the embedded the heating wire, the distance (the shortest distance) from the heating wire (or an end of the heating wire) to an end of the heat-generating adhesive member (or the inner wall of the hose unit or the outer wall of the tube) may be, for example, not less than 0.05 mm (e.g., about 0.1 to 5 mm) and preferably about 0.1 to 3 mm (e.g., about 0.2 to 2 mm).

The heat-generating adhesive member may usually comprise a resin containing a heat-generating element capable of generating heat by an electromagnetic means (e.g., a heating wire and an electro-conductive material). The resin for the heat-generating adhesive member (or the main body) may be a thermosetting resin or an uncrosslinked rubber as long as the resin can adhesively attach (or bond) the tube to the hose unit by heat generation (heat conduction) from the heat-generating element. The resin preferably includes a thermoplastic resin which can be softened or melted by generated heat or heating. Incidentally, the thermosetting resin or the uncrosslinked rubber is heated by the heat-generating means and hardened or crosslinked to adhere the tube to the hose unit.

The thermoplastic resin may include resins as exemplified above. The resin for the heat-generating adhesive member may be the same or same series resin as the resin for the hose unit and/or the tube, as described above, or may be a resin which is softened or melted easily compared with the resin for the hose unit and/or the tube. In the latter case, the melting point (or softening point) of the resin for the heat-generating adhesive member may be lower than that of the resin for the hose unit and/or the tube, and the difference between the both melting (or softening) points may be not less than 1°C (e.g., about 2 to 80°C), preferably not less than 3°C (e.g., about 4 to 50°C), and more preferably not less than 5°C (e.g., about 7 to 30°C).

Incidentally, the heat-generating adhesive member may also contain an additive as described above.

### (Variations of heat-generating adhesive member)

Variations of the heat-generating adhesive member will be explained in detail. Fig. 9 is a cross-sectional view of some embodiments or modes in each of which an electrically heatable linear heat-generating adhesive member is installed on (or integrated with) the tube. Fig. 9(a) is a drawing corresponding to the first embodiment and illustrates an embodiment in which the metal heating wire 32 is embedded in a central region of the strip-shaped non-heat-generating main body 31. In this embodiment, the material for the heating wire 32 is not particularly limited to a stainless-steel twisted wire. Other metal wires may be used as the heating wire 32 in the form of a single wire, a bundle, a twisted wire, or a knitted wire. In addition, a single-yarn-shaped (or linear) fiber assembly containing an electro-conductive fiber (for example, a carbon fiber) may be used as the heating wire 32. In order to impart a certain elasticity (or flexibility) to the heating wire 32 and improve the bendability of the flexible hose as a final product, the heating wire 32 is preferably in the form of a twisted or knitted wire.

The embodiment in which the heating wire 32 is embedded in the main body of the heat-generating adhesive member may be an embodiment in which the heating wire 32 is wrapped in (or covered with) the non-heat-generating main body 31 having a circular cross section, as shown in Fig. 9(b).

Moreover, instead of the heating wire 32, a linear heat-generating adhesive member comprising a thermoplastic electro-conductive resin material and generating heat by an electric current may also be used. In an embodiment illustrated in Fig. 9(c), the adhesive member 4 is linearly arranged along the longitudinal direction of the tube, and the whole of the adhesive member 4 comprises a thermoplastic electro-conductive resin material.

Moreover, in an embodiment illustrated in Fig. 9(d), a linear heat-generating adhesive member 5 is arranged along the tube and comprises a linear heat-generating section 51 comprising a thermoplastic electro-conductive resin material and a non-heat-generating section 52 comprising a non-electro-conductive resin material and surrounding the heat-generating part 51.

These heat-generating adhesive members 4 and 5 of these embodiments may be produced, for example, by feeding a suitably prepared electro-conductive resin material to an extruder and co-extruding the resin material and a material for the tube 2. According to these embodiments, in the same manner as in the first embodiment, the thermoplastic resin material is melted by applying a current to adhere the wall of the hose unit to the heat-generating adhesive member 4.

The electro-conductive resin material to be used in these embodiments may include a material containing a resin material and an electro-conductive additive (or an electro-conductive agent). Examples of the electro-conductive additive may include an electro-conductive particle (for example, an electro-conductive nonmetal particle such as a carbon black), an electro-conductive fiber (e.g., a carbon fiber and a metal fiber), and a metal powder (or a metal particle). In order to obtain a uniform temperature over the whole length of the linear heat-generating section, if possible, it is preferred to use an electro-conductive material having a negative temperature coefficient of resistance as the electro-conductive resin material. Incidentally, depending on the species of the electro-conductive agent, the proportion of the electro-conductive agent in the electro-conductive resin material may be, for example, not less than 0.5% by volume (e.g., about 1 to 90% by volume) and preferably about 2 to 70% by volume.

As the electromagnetic means for heating the heat-generating adhesive member, electromagnetic wave irradiation may also be utilized. For electromagnetic wave irradiation, a resin composition which generates heat by electromagnetic wave irradiation (an electromagnetically heat-generating resin material) can be used for a heating region (or portion) of the heat-generating adhesive member. Such a resin composition may include a resin composition (e.g., a thermoplastic resin composition) containing a resin and an electromagnetically heat-generating component (for example, a metal powder). For example, a magnetite powder or the like may be used as the metal powder, and microwave may be utilized as the electromagnetic wave. Incidentally, the proportion of the electromagnetically heat-generating component in the resin composition may be, for example, not less than 1% by volume (e.g. , about 2 to 90% by volume) and preferably about 3 to 70% by volume. As the resin for the electromagnetically heat-generating adhesive member, the resin as described above may be used.

Even for the electromagnetically heat-generating adhesive member, the flexible hose can be produced in basically the same manner as in the first embodiment except for the use of an electromagnetic wave in the step for adhering the tube to the hose unit. Such a production process has some advantages, including uniform adhesion state or appropriate (or reasonable) adhesion condition due to an accurate control of the amount of generated heat. A first advantage of the electromagnetically heat-generating adhesive member is that it is unnecessary to wire a current-suppying apparatus (or an electic current circuit) and the efficiency in the production of the flexible hose is further improved.

Moreover, a second advantage of the electromagnetically heat-generating adhesive member is that heat generation and adhesive attachment of the heat-generating adhesive member can be carried out not over the whole length of the hose unit simultaneously but in the longitudinal direction of the hose unit sequentially or intermittently. In this case, an electromagnetic wave irradiator is arranged in order to apply an electromagnetic wave along the longitudinal direction of the hose unit. Needless to say, the tube may also be adhered to the hose unit simultaneously over the whole length of the hose unit by applying an electromagnetic wave simultaneously over the whole length thereof. The adhering step in which electromagnetic wave irradiation and pressing are applied sequentially along the longitudinal direction of the hose unit is particularly effective in producing a hose in which the tube is spirally adhered (attached or bonded) inside the hose unit.

Further, for the electromagnetically heat-generating adhesive member, it is unnecessary to arrange the heat-generating adhesive member in a continuous line form. Thus, as shown in Fig. 10, a heat-generating adhesive member 6, 6 may be arranged intermittently along the longitudinal direction of the tube 2 (Fig. 10(a)) or a dotted heat-generating adhesive member 7 , 7 may be arranged in a belt or strip area along the longitudinal direction of the tube (Fig. 10(b)). Such an arrangement of the heat-generating adhesive member improves the elasticity or bendability of the hose because the tube 2 is adhered to the hose unit 1 intermittently (or discontinuously).

Moreover, although the embodiment using the thermoplastic adhesive as the adhesive of the heat-generating adhesive member is mainly illustrated in the above explanation, the adhesive is not limited to the thermoplastic adhesive as long as the adhesion treatment can be completed by heat generation. A thermosetting adhesive (for example, an uncrosslinked silicone rubber paste) may also be used as the adhesive. For the use of the thermosetting adhesive, the tube may be adhesively attached to the hose unit as follows: an uncrosslinked silicone rubber as the main portion (or main body) 31 is extruded for covering (or wrapping) the heating wire 32 to form the heat-generating adhesive member 3; the heat-generating adhesive member 3 is attached to the tube 2 and then introduced into the hose unit 1; and the uncrosslinked silicone rubber is thermally crosslinked by applying a current to the heating wire 32 while pressing the heat-generating adhesive member 3 to the inner surface of the hose unit to adhere the tube 2 to the hose unit 1.

Moreover, although the above-mentioned embodiments explain the flexible hose for a vacuum cleaner, a use of the flexible hose of the present invention is not limited to a vacuum cleaner. That is, the flexible hose (the flexible hose including a tube) of the present invention can widely be used as a ventilation hose and various transfer hoses, for transferring a gas, a powder or a liquid, and other purposes as long as the flexible hose has the tube attached to the hose unit along the longitudinal direction of the hose unit.

### INDUSTRIAL APPLICABILITY

The flexible hose of the present invention is usable as, for example, a hose for a vacuum cleaner, and the tube, which is attached to the inside of the hose unit, may be used to accommodate a signal line or a power cable to be wired or may be used to send an air or a cleansing liquid to a suction port of a vacuum cleaner. According to the present invention, the tube and the hose unit are adhered uniformly to improve the quality of a flexible hose, and thus the present invention provides a high industrial utility value.

### DESCRIPTION OF REFERENCE NUMERALS

- A: Flexible hose
- 10: Vacuum cleaner body
- 11: Joint pipe
- 12: Grip and operation unit
- 13: Extension pipe
- 14: Suction nozzle
- 1: Hose unit
- 2: Tube
- 3: Heat-generating adhesive member
- 31: Main body
- 32: Heating wire
- E1, E2: Extruder
- T1, T4: Die
- T2: Sizing apparatus
- T3: Feeder
- T5: Attaching roller
- T6: Cooling and drawing machine
- G1: Holder
- G2: Hose guide member
- G3: Pressurizing unit
- W: Electric-current circuit
- 4, 5, 6, 7: Heat-generating adhesive member
- 51: Heat-generating section
- 52: Non-heat-generating section

## Claims

1. A flexible hose comprising a hose unit and a tube adhered to an inner wall of the hose unit, wherein the tube is adhered to the hose unit with a heat-generating adhesive member, and the heat-generating adhesive member generates heat by an electromagnetic means and is arranged along a longitudinal direction of the tube.

2. A flexible hose according to claim 1, wherein the heat-generating adhesive member is a linear member which generates heat by passage of a current to express an adhesive property.

3. A flexible hose according to claim 2, wherein the heat-generating adhesive member has a main body comprising a non-heat-generating thermoplastic adhesive and a heating wire embedded in the main body along a longitudinal direction of the heat-generating adhesive member.

4. A flexible hose according to claim 3, wherein the main body has a strip form along an inner surface of the hose unit in a circumferential direction of the hose unit, and the embedded heating wire is located in a central or nearly central region of the main body in the circumferential direction of the hose unit.

5. A flexible hose according to claim 2, wherein the heat-generating adhesive member comprises a main body comprising a thermoplastic adhesive, and the main body at least has a longitudinally-extending region which comprises an electro-conductive thermoplastic adhesive containing an electro-conductive material and a thermoplastic resin.

6. A flexible hose according to claim 1, wherein the heat-generating adhesive member generates heat by electromagnetic wave irradiation to express an adhesive property.

7. A flexible hose according to any one of claims 1 to 6, which is a hose for a vacuum cleaner.

8. A process for producing a flexible hose comprising a hose unit and a tube adhered to an inner wall of the hose unit, the process comprising
a first step for arranging a heat-generating adhesive member on an outer surface of the tube, the heat-generating adhesive member generating heat by an electromagnetic means,
following the first step, a second step for holding the tube by a rod-shaped holder with the heat-generating adhesive member exposed from the holder,
following the second step, a third step for introducing the holder and the tube into the hose unit to face the heat-generating adhesive member toward an inner surface of the hose unit, and
following the third step, a fourth step for generating heat from the heat-generating adhesive member by an electromagnetic means and bringing the hose unit and the heat-generating adhesive member in contact with each other to adhere the tube to the hose unit.

9. A vacuum cleaner provided with a flexible hose recited in any one of claims 1 to 6.
